# EUROPEAN PATENT APPLICATION

(11) **EP 4 659 937 A1**
(43) Date of publication of application: **10.12.2025**
(21) Application number: 23875925.2
(22) Date of filing: 30.06.2023
(51) Int. Cl.: B29C 64/135, B29C 64/386, B29C 64/20, B33Y 30/00, B33Y 50/00

(54) **CANTILEVER ASSEMBLY AND RAPID FORMING DEVICE**

(30) Priority: 23.03.2023 CN 202320664543 U
(71) Applicant: Shenzhen Anycubic Technology Co., Ltd., Shenzhen, Guangdong 518116 (CN)
(72) Inventor: ZHAN, Xiaolin, Shenzhen, Guangdong 518000 (CN); XIE, Fei, Shenzhen, Guangdong 518000 (CN)
(74) Representative: Haseltine Lake Kempner LLP
(86) International application number: PCT/CN2023/104592
(87) International publication number: WO 2024/192920

(57) **Abstract**

The present invention discloses a cantilever assembly and a rapid prototyping device. Essentially, a force sensor is arranged on a cantilever body to detect a degree of deformation in a process of the cantilever pulling a model for release, so as to determine whether a printing is successful or not, thereby avoiding the problem of affecting light transmission caused by a sensing member arranged between a display screen and a release liner.

## Description

### TECHNICAL FIELD

The present invention relates to the technical field of additive manufacturing, and in particular to a cantilever assembly and a rapid prototyping device.

### BACKGROUND

In a 3D printing device that uses light curing for rapid prototyping, a resin vat is filled with a resin and then placed on a display screen of a rapid prototyping device. A light source projects light rays to the resin vat from the side of the display screen facing away from the resin vat. The display screen is configured to display a pattern with a specific outline, the light rays pass through the pattern and are projected on the resin in the resin vat, so that the resin between a prototyping platform and a release liner is cured, then a movement assembly of the rapid prototyping device drives the prototyping platform to move, so as to pull a cured model up to peel it off from the release liner at the bottom of the resin vat, and the resin will be filled between the formed model and the release liner, then continuing to print the next layer, so that rapid prototyping is achieved through layer-by-layer stacking.

Due to a certain adhesion between the model and the release liner, the model is subjected to a reverse pulling force from the prototyping platform and the release liner during the peeling process. It is likely to cause the model to break. A part of the model is adhered to the prototyping platform, and the other part remains on the release liner. In order to realize the feedback on the model not completely separated from the release liner, in the prior art, a sensing member is provided between the display screen and the release liner. For example, a 3D printer is disclosed in the patent publication No. CN 115195123 A. A release liner is provided at the bottom of a resin vat, an electrically-conductive layer is provided below the release liner, and the electrically-conductive layer is electrically connected to a processor. When it is confirmed that the slice printing is completed, whether the printing is successful or not is determined by obtaining a current value or a voltage value of the electrically-conductive layer. The arrangement of a sensing member such as an electrically-conductive layer below the release liner will affect the light transmission between the display screen and the resin, and thus affect the accuracy of curing of the resin.

Therefore, how to prevent the sensing member from affecting the light transmission becomes a problem to be solved.

### SUMMARY

In view of this, embodiments of the present invention provides a cantilever assembly and a rapid prototyping device, to solve the existing problem of affect light transmission caused by a sensing member arranged between a display screen and a release liner.

To achieve the above objective, the present invention provides a technical solution as follows:
In an aspect, the present invention provides a cantilever assembly, configured to be connected to a movement assembly and a prototyping platform of a rapid prototyping device, so as to drive the prototyping platform to move under the action of the movement assembly. The cantilever assembly includes: a cantilever body and a force sensor. A first end of the cantilever body is configured to be connected to the prototyping platform, and a second end of the cantilever body is configured to be connected to the movement assembly; and the force sensor is arranged on the cantilever body and configured to detect a deformation of the cantilever body and generate a detection signal.

In an aspect, the present invention provides a rapid prototyping device including the cantilever assembly mentioned above.

In the cantilever assembly and the cantilever assembly proposed in the present invention, essentially, the force sensor is arranged on the cantilever body to detect a force on the cantilever, such as a degree of deformation in a process of pulling a model for release, so as to control the printing process of the model, thereby avoiding the problem of affecting light transmission caused by a sensing member arranged between a display screen and a release liner. In the prior art, the arrangement of the sensing member between the display screen and the release liner will affect the light transmission between the display screen and the resin, and thus affect the accuracy of curing of the resin. Compared with the prior art, in the present application, the force sensor is arranged on the cantilever body, and the cantilever body will drive the prototyping platform to pull the current layer of model up after the model is cured. Since the current layer of model is adhered to the release liner, the cantilever body will be subjected to the pull-down effect generated due to the adhesion between the current layer of model and the release liner, and the cantilever body thus will have a certain regular deformation. When the printing fails, due to the change of the degree of adhesion between the current layer of model and the release liner or the change of the separation process, the pull-down effect of the current layer of model on the cantilever body will change, the deformation of the cantilever body will be abnormal, and the detection of abnormal printing can be realized according to the abnormal deformation. The arrangement of the force sensor on the cantilever body avoids the problem of affecting light transmission caused by a sensing member arranged between a display screen and a release liner, and the detection accuracy of the sensing member will not be affected by the instantaneous high curing temperature of the resin or the friction between the resin vat and the display screen. Moreover, the force sensor is easy to replace because there is no need to make the force sensor below the release liner, saving the cost.

### BRIEF DESCRIPTION OF THE DRAWINGS

FIG. 1 is a schematic structural diagram of a cantilever assembly according to an embodiment of the present invention from a first perspective;
FIG. 2 is a schematic structural diagram of a cantilever assembly according to an embodiment of the present invention from a second perspective;
FIG. 3 is an exploded view of a cantilever assembly according to an embodiment of the present invention from a first perspective;
FIG. 4 is an exploded view of a cantilever assembly according to an embodiment of the present invention from a second perspective;
FIG. 5 is a partial sectional view of a cantilever assembly according to an embodiment of the present invention;
FIG. 6 is a partial sectional view of another cantilever assembly according to an embodiment of the present invention;
FIG. 7 is a schematic structural diagram of a rapid prototyping device according to an embodiment of the present invention;
FIG. 8 is a schematic structural diagram of another rapid prototyping device according to an embodiment of the present invention; and
FIG. 9 is a schematic structural diagram of the connection between a cantilever assembly and a movement assembly according to an embodiment of the present invention.

### DETAILED DESCRIPTION OF THE EMBODIMENTS

In order to further set forth the technical means and effects provided by the present invention to achieve the intended purpose of the present invention, a cantilever assembly proposed according to the present invention, and the specific implementations, structures, features and effects thereof are described in detail below with respect to the accompanying drawings and preferred embodiments.

To achieve the above objective, the present invention mainly provides the following technical solutions.

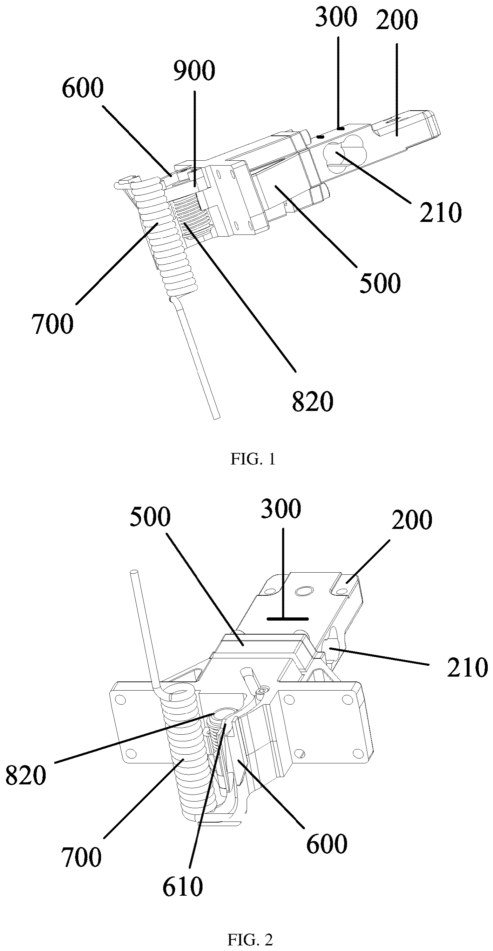

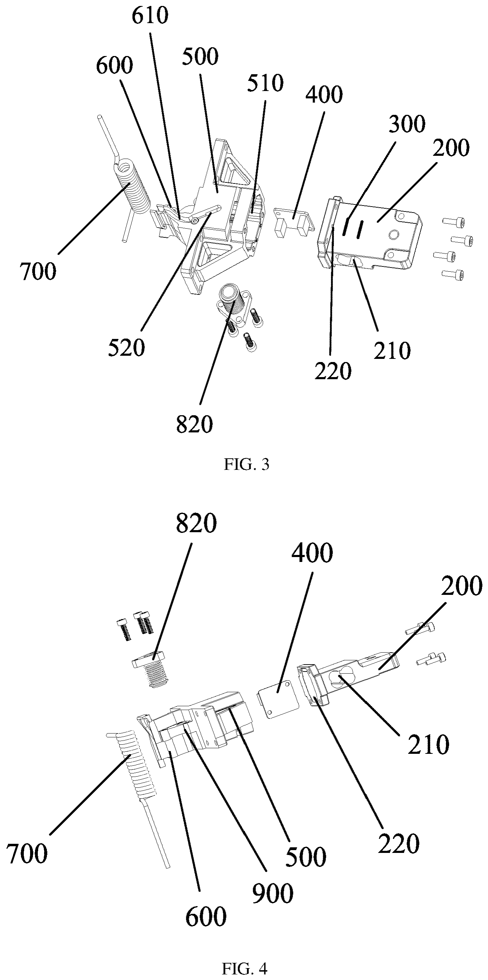

In an aspect, as shown in FIGS. 1-4, the present invention provides a cantilever assembly, configured to be connected to a movement assembly 800 and a prototyping platform 100 of a rapid prototyping device, so as to drive the prototyping platform 100 to move under the action of the movement assembly 800. The cantilever assembly includes: a cantilever body 200, and a force sensor 300.

A first end of the cantilever body 200 is configured to be connected to the prototyping platform 100, and a second end of the cantilever body 200 is configured to be connected to the movement assembly 800.

The force sensor 300 is arranged on the cantilever body 200 and configured to detect a deformation of the cantilever body 200 and generate a detection signal.

The cantilever body 200 is generally perpendicularly connected to the movement assembly 800, and the end of the cantilever body 200 away from the movement assembly 800 is suspended and configured to be connected to the prototyping platform 100. In actual use, the movement assembly 800 extends vertically, and the movement assembly 800 drives the cantilever body 200 to move vertically, and then drives the prototyping platform 100 to approach or move away from a base 10 of the rapid prototyping device or to approach or move away from a resin vat 20. A resin in the resin vat 20 is cured between the formed previous layer of model and a release liner to form a layer of the printed model as the current layer of model, and two sides of the current layer of model are adhered to the release liner and the previous layer of model at the same time. After the printing of one layer is completed, the cantilever body 200 will drive the prototyping platform 100 to pull the current layer of model up, and the cantilever body 200 will be simultaneously subjected to the comprehensive effect of the gravity of the prototyping platform 100 and the formed model, a release force between the current layer of model and the release liner, and the fluid resistance of the prototyping platform 100 moving relative to the resin. The force on the cantilever body 200 will have a certain rule during the release process of the current layer of model. When the printing fails, due to the abnormal adhesion between the current layer of model and the release liner, the force law of the cantilever body 200 will change. Printing failure is generally divided into two situations. One is that the previous layer of model is broken, a part of the model is not completely separated from the release liner, resulting in a decrease in the adhesion between the current layer of model and the release liner, and the release force applied to the cantilever body 200 will be greatly reduced during the release process; and the other is that the current layer of model will be broken by pulling due to insufficient adhesion or incomplete curing with the previous layer of model, there will be no model release process, and the force applied to the cantilever body 200 is also reduced during the release process.

Whether the release process is normal can be determined by detecting the force on the cantilever body 200, and the force on the cantilever body 200 will inevitably expand or shrink a surface of the cantilever body 200. For example, the downward pulling force on the first end of the cantilever body 200 will inevitably expand the top side surface of the cantilever body 200, while the bottom side surface is shrunk. By arranging the force sensor 300 on the cantilever body 200 and detecting the deformation of the cantilever body 200, the force on the cantilever body 200 can be obtained. The force sensor 300 converts the physical quantity of deformation into a detection signal and transmits the detection signal to a main controller of the rapid prototyping device, and then the main controller may control the printing process according to a printing procedure and the force on the cantilever body 200, such as including, but not limited to, determining whether the printing is successful or not.

In the cantilever assembly and the cantilever assembly proposed in the present invention, essentially, the force sensor is arranged on the cantilever body to detect a degree of deformation in the process of the cantilever pulling the model for release, so as to determine whether the printing is successful or not, thereby avoiding the problem of affecting light transmission caused by a sensing member arranged between a display screen and a release liner. In the prior art, the arrangement of the sensing member between the display screen and the release liner will affect the light transmission between the display screen and the resin, and thus affect the accuracy of curing of the resin. Compared with the prior art, in the present application, the force sensor is arranged on the cantilever body, and the cantilever body will drive the prototyping platform to pull the current layer of model up after the model is cured. Since the current layer of model is adhered to the release liner, the cantilever body will be subjected to the pull-down effect generated due to the adhesion between the current layer of model and the release liner, and the cantilever body thus will have a certain regular deformation. When the printing fails, due to the change of the degree of adhesion between the current layer of model and the release liner or the change of the separation process, the pull-down effect of the current layer of model on the cantilever body will change, the deformation of the cantilever body will be abnormal, and the detection of abnormal printing can be realized according to the abnormal deformation. The arrangement of the force sensor on the cantilever body avoids the problem of affecting light transmission caused by a sensing member arranged between a display screen and a release liner, and the detection accuracy of the sensing member will not be affected by the instantaneous high curing temperature of the resin or the friction between the resin vat and the display screen. Moreover, the force sensor is easy to replace because there is no need to make the force sensor below the release liner, saving the cost. It can be understood that the force sensor 300 is not limited to detecting deformation, as long as it can detect the force on the cantilever.

The force sensor 300 may have various forms, and may be arranged in various positions on the cantilever body 200. For example, the force sensor may be a strain gage, such as a resistance strain gage. The resistance strain gage is made of a conductor or semiconductor material, the resistance strain gage is arranged on the cantilever body 200, the shape of the resistance strain gage changes with the change of the structure of the cantilever body 200, the change of the shape of the resistance strain gage will cause the change of the resistance value of the resistance strain gage, and the deformation amount can be obtained by measuring the resistance value of the resistance strain gage. In addition, the force sensor may also be an optical strain gage. When the shape of the optical strain gage changes with the cantilever body 200, the refractive index of the optical strain gage will be changed, thereby changing the return time of the reflected light, and the deformation amount can thus be obtained according to the return time of the reflected light. Since the surface of the cantilever body 200 expands and shrinks more than the inside, and is more convenient to mount the strain gage, the strain gage is arranged on the surface of the cantilever body 200 to increase the detection sensitivity. In other implementations, the strain gage may also be arranged inside the cantilever body 200.

In an implementation, the cantilever body 200 is provided with a deformation hole 210, and the strain gage is laid on an outer surface of the cantilever body 200 corresponding to the deformation hole 210. Due to the provision of the deformation hole 210, the side wall of the cantilever body 200 at the deformation hole 210 will be thinned, and side walls on two sides of the deformation hole 210 can be elastically deformed by approaching each other by means of the deformation hole 210, so that when the cantilever body 200 is deformed, the area of the cantilever body 200 corresponding to the deformation hole 210 will be the area with the largest deformation amount. By arranging the strain gage on the outer surface of the cantilever body 200 corresponding to the deformation hole 210, the deformation of the cantilever body 200 can be captured to the greatest extent, the sensitivity of the strain gage is enhanced, and the accuracy of detection is increased.

The cantilever body 200 may be in various shapes, but most of them are approximately columnar structures, such as cylinders and square columns. For convenience of description, in the following embodiments, the cantilever body 200 or at least the part of the cantilever body 200 connected to the force sensor 300 having an approximately square columnar structure is taken as an example. In an implementation, the deformation hole 210 runs through two sides of the cantilever body 200, and an extending direction of the deformation hole 210 is perpendicular to a moving direction of the cantilever body 200, and is perpendicular to a direction from the first end to the second end of the cantilever body 200, so that the deformation hole 210 is configured to be more adapted to the deformation characteristics of the cantilever body 200, the cantilever body 200 can be uniformly deformed in the extending direction of the deformation hole 210, the deformation is more concentrated at the deformation hole 210, the strain gage can be arranged anywhere in the extending direction of the deformation hole 210, and it is also possible to avoid the phenomenon that the cantilever body 200 is skewed. When the cantilever body 200 is approximately a square column, there may be two strain gages, which are arranged on an upper surface and a lower surface corresponding to the deformation hole 210, so as to detect the expanding deformation and the shrinking deformation simultaneously.

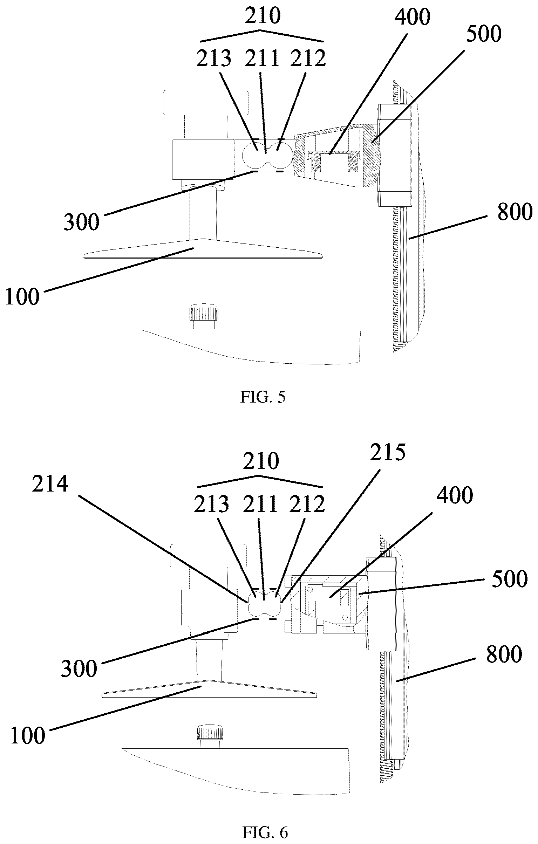

In addition, the deformation hole 210 may be in various shapes. According to the shape of the deformation hole 210, the number and locations of strain gages are also different, with the aim of being able to produce a thinner sidewall region of the cantilever body 200 and to arrange a strain gage on the thinner sidewall region, so as to obtain the deformation amount of the cantilever body 200 to the greatest extent. Two specific structures are exemplified below, and it can be understood that the features thereof may appear together or individually. In an implementation, as shown in FIG. 5, the deformation hole 210 includes a first sub-hole area 212, a communication area 211 and a second sub-hole area 213 arranged side by side in sequence in the direction from the first end to the second end of the cantilever body 200, and the first sub-hole area 212 is in communication with the second sub-hole area 213 through the communication area 211. A minimum distance between hole walls of the first sub-hole area 212 and the second sub-hole area 213 and the outer surface of the cantilever body 200 in the moving direction of the cantilever body 200 is less than a minimum distance between a hole wall of the communication area 211 and the outer surface of the cantilever body 200 in the moving direction of the cantilever body 200. Outer surfaces of the cantilever body 200 corresponding to the first sub-hole area 212 and the second sub-hole area 213 are both provided with the strain gage.

The first sub-hole area 212, the communication area 211 and the second sub-hole area 213 are all different areas of the entire deformation hole 210, and any of the areas runs through the two sides of the cantilever body 200 and is an area having a uniform cross-section between the two sides of the cantilever body 200. The first sub-hole area 212 and the second sub-hole area 213 are arranged symmetrically with respect to the communication area 211, and the entire deformation hole 210 is symmetrical with respect to the middle cross-section of the cantilever body 200 in the moving direction, that is, the distance from an upper hole wall edge of the deformation hole 210 to the upper surface of the cantilever is equal to the distance from a lower hole wall edge of the deformation hole 210 to the lower surface of the cantilever. An inner wall of the first sub-hole area 212 and an inner wall of the second sub-hole area 213 are both arc-shaped inner walls or circular-arc-shaped inner walls. The communication area 211 includes an upper-end inner wall and a lower-end inner wall. The upper-end inner wall is lower than the highest point of the inner wall of the first sub-hole area 212, and the lower-end inner wall is higher than the lowest point of the inner wall of the first sub-hole area 212. In this way, the side wall of the cantilever body 200 is thicker at the communication area 211, and is thinner at the highest point and the lowest point of the inner walls of the first sub-hole area 212 and the second sub-hole area 213, thereby defining the maximum deformation area of the cantilever body 200 at the first sub-hole area 212 and the second sub-hole area 213.

The strain gage may be arranged only at the top face or the bottom face of the cantilever body 200, or strain gages may be arranged at both the top face and the bottom face. If the strain gage includes four strain structures respectively arranged on one side of the cantilever body 200 in the moving direction, the first sub-hole area 212 is provided with two strain structures at the minimum distance from the outer surface of the cantilever body 200 in the moving direction of the cantilever body 200, and the second sub-hole area 213 is provided with two strain structures at the minimum distance from the outer surface of the cantilever body 200 in the moving direction of the cantilever body 200. The four strain structures constitute four bridge arms of a Wheatstone bridge, and the four strain structures constitute a complete strain gage. The strain gage may be connected to the conversion circuit 400. When the cantilever body 200 is deformed, the resistance value of the strain gage will be changed. The conversion circuit 400 will obtain the voltage change and transmit same to the main controller of the rapid prototyping device, and the main controller can obtain the deformation amount according to the voltage change. The strain gage is a common force sensor, and its specific circuit structure will not be further described in the present application.

In some embodiments, the inner wall of the communication area 211 is an arc-shaped inner wall, so that the inner wall of the communication area 211 is more easily deformed, further increasing the extent to which the deformation of the cantilever body 200 is concentrated at the deformation hole 210.

In another implementation, strain gages are arranged on two sides of the cantilever body 200 in the moving direction.

The deformation hole 210 is provided with a first protrusion 214 and a second protrusion 215 respectively on inner walls opposite to the first end and the second end of the cantilever body 200. The first protrusion 214 and the second protrusion 215 are located in the middle of the deformation hole 210 in the moving direction of the cantilever body 200.

The first protrusion 214 and the second protrusion 215 make the deformation of the cantilever body 200 more concentrated in the non-protruding part of the deformation hole 210 in the moving direction of the cantilever body 200, that is, more concentrated in the top face and the bottom face of the cantilever body 200, providing a larger degree of deformation for the detection of the strain gage. In the implementation where the deformation hole 210 includes the first sub-hole area 212, the communication area 211 and the second sub-hole area 213, the first protrusion 214 and the second protrusion 215 are respectively arranged on the side walls of the first sub-hole area 212 and the second sub-hole area 213 away from the communication area 211, the first protrusion 214 and the second protrusion 215 extend opposite to each other, and the first protrusion 214 and the second protrusion 215 are both in arc-shaped transition with the inner walls of the first sub-hole area 212 and the second sub-hole area 213. When the strain gage includes four strain structures corresponding to the upper and lower sides of the first sub-hole area 212 and the second sub-hole area 213, the first protrusion 214 and the second protrusion 215 make the deformation more concentrated in the side walls on the upper and lower sides of the first sub-hole area 212 and in the side walls on the upper and lower sides of the second sub-hole area 213, that is, more concentrated in the area where the strain gage is mounted, so that a large degree of deformation is detected by the strain gage and the detection force is more sensitive. For example, it is possible that the abnormal deformation is more obvious when the printing fails, and the detection success rate is higher.

In an implementation, the cantilever assembly further includes a conversion circuit 400. The conversion circuit 400 is electrically connected to the force sensor 300, the conversion circuit 400 is further electrically connected to a main controller of the rapid prototyping device, the conversion circuit 400 is configured to amplify the detection signal, and a wire between the conversion circuit 400 and the main controller has a length at least three times that of a wire between the conversion circuit 400 and the force sensor 300.

The detection signal generated by the force sensor 300 is relatively weak. If the direct channel wire of the force sensor 300 is electrically connected to the main controller of the rapid prototyping device, the detection signal is susceptible to external interference, and the signal is thus likely to be distorted; and the long transmission distance may also cause problems. The conversion circuit 400 is additionally provided to amplify the detection signal and send same to the main controller, so that the detection signal obtained by the main controller is more accurate and the accuracy rate is increased. In the present application, the length of the wire between the conversion circuit 400 and the main controller is at least three times the length of the wire between the conversion circuit 400 and the force sensor 300, that is, the conversion circuit 400 is closer to the force sensor 300, and the amplification is performed earlier, further improving the accuracy of the detection signal. It can be understood that the conversion circuit 400 is not limited to only having an amplification function, and may also include other functions, such as performing analog-to-digital conversion, so as to send the converted signal to the main controller.

The specific form of the conversion circuit 400 is not limited, for example, it may be integrated on one or more circuit boards. The form of the circuit board is easier to fix and mount. The circuit board of the conversion circuit 400 is electrically connected to the main controller via a first terminal, and/or the circuit board is electrically connected to the force sensor 300 via a second terminal. The first terminal and the second terminal may be commonly used terminals for wire connection in electronic components, and belong to a kind of connector that can facilitate the electrical connection of two components. The naming of the first terminal and the second terminal is to distinguish that they are not the same terminal. It can be understood that the electrical connection between the circuit board and other components may be carried out via one or more terminals. The terminal may be integrated on the circuit board, or may be used as separate components.

The cantilever assembly further includes a cantilever base 500. The cantilever base 500 is configured to be connected to the movement assembly 800, the cantilever body 200 is connected to the cantilever base 500, the cantilever base 500 comprises a receiving cavity 510, the conversion circuit 400 is located in the receiving cavity, the cantilever body 200 is provided with a wire entry hole 220, the wire entry hole 220 is in communication with the receiving cavity, and the conversion circuit 400 is electrically connected to the force sensor 300 by means of the wire entry hole 220.

One end of the cantilever base 500 is provided with an opening and a receiving cavity in communication with the opening. The second end of the cantilever body 200 is connected to an edge of the opening and may be connected thereto via a bolt. An end face of the second end of the cantilever body 200 and the receiving cavity jointly limit the conversion circuit 400 within the receiving cavity. The conversion circuit 400 may be horizontally fixed in the receiving cavity as shown in FIG. 5, or may be vertically fixed in the receiving cavity as shown in FIG. 6. The conversion circuit 400 is arranged in the receiving cavity, so that the distance between the conversion circuit 400 and the force sensor 300 is short, and the length of the connecting wire is reduced, so that the signal interference or loss caused by the long wire is reduced, and a small voltage change of the strain gage is obtained more accurately, to more accurately determine the corresponding state of the force, such as whether the cantilever body 200 is abnormally deformed or not.

In the present application, the cantilever assembly includes the cantilever base 500 and the cantilever body 200, that is, the cantilever assembly is not only composed of a cross bar, but the cantilever assembly is of a split structure. That is , it is convenient to mount the conversion circuit 400 and make the conversion circuit 400 more concealed and safer, preventing the conversion circuit 400 from being destroyed. Moreover, the cantilever base 500 can be adapted to different types of cantilever bodies 200. The different structures of the deformation holes 210 of the cantilever bodies 200 make the sensitivity different, so that the cantilever base 500 can be adapted to different cantilever main bodies 200 according to requirements, and the electrical connection of the circuit board of the conversion circuit 400 via the terminals also increases the diversity of adaptation of the cantilever assembly.

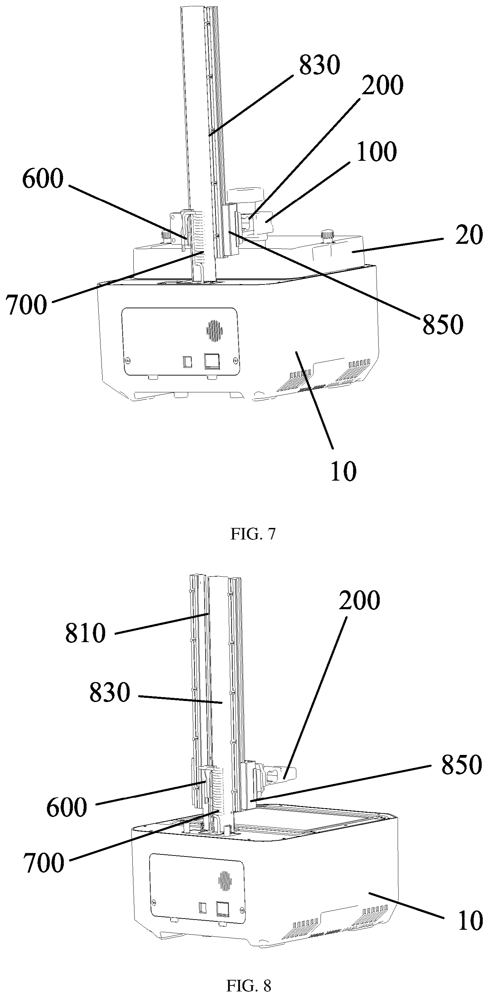

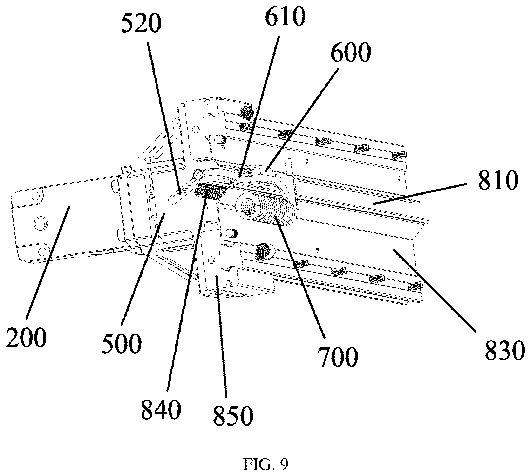

The conversion circuit 400 is electrically connected to the main controller of the rapid prototyping device via a wire 700. The main controller of the rapid prototyping device is generally arranged in an inner cavity of the base 10, and the conversion circuit 400 will follow the cantilever body 200 to move up and down. In order to make the wire 700 not affect the simplicity of the appearance of the rapid prototyping device, in an implementation, as shown in FIGS. 7-9, the cantilever assembly further includes a rear wire placement plate 600. The rear wire placement plate 600 is connected to the cantilever base 500, and an end of the rear wire placement plate 600 extends in a direction away from the cantilever base 500 such that when the cantilever assembly is connected to the movement assembly 800, the end of the rear wire placement plate 600 is located in a recess of the movement assembly 800. The rear wire placement plate 600 is provided with a wiring groove 610, the cantilever base 500 is provided with a wire exit hole 520, a first end of the wiring groove 610 is in communication with the receiving cavity 510 through the wire exit hole 520, and a second end of the wiring groove 610 extends to the end of the rear wire placement plate 600. The wire 700 between the conversion circuit 400 and the main controller of the rapid prototyping device is routed through the wiring groove 610.

The rear wire placement plate 600 is arranged at the other end of the cantilever base 500 facing away from the opening. The rear wire placement plate 600 is not a flat plate-like structure, but a zigzag structure, so that the rear wire placement plate 600 can extend into the recess provided on the movement assembly 800, so as to hide the wire 700 between the conversion circuit 400 and the main controller of the rapid prototyping device. The wire exit hole 520 is located at the bottom end of the cantilever base 500 relative to the base 10. The wire 700 is drawn out from the wire exit hole 520 and extends along the wiring groove 610 to the recess provided on the movement assembly 800, so that the cable is stored or stretched in the recess of the movement assembly 800, avoid affecting the printing procedure on one side of the cantilever base 500.

In an implementation, the wire 700 includes a spring cable, that is, at least part of the wire is a spring cable. A part of the spring cable is fixedly connected to the rear wire placement plate 600, and the other part of the spring cable is fixedly connected to the base 500. When the wire 700 is stored, it is regularly stored in a spiral upward coiled manner to prevent the stored wire 700 from loosening and drooping. In addition, when the prototyping platform 100 is raised and lowered, only the spring cable between the rear wire placement plate 600 and the base 500 is pulled to prevent the wire between the base and the main controller from being pulled. It can be understood that the wire between the conversion circuit 400 and the main controller may be partly a spring cable, or may be a spring cable as a whole. When the spring cable is fixedly connected to the rear wire placement plate 600, the spring cable may be fixed by means of a cable tie or the like.

In an implementation, the cantilever assembly further includes a nut connecting plate 900. The nut connecting plate 900 is connected to at least one of the rear wire placement plate 600 and the cantilever base 500 and configured to be threadedly connected to a lead screw nut 820 of the movement assembly 800. The nut connecting plate 900 is of an approximately triangular plate-shaped structure, and two sides of the nut connecting plate 900 are respectively connected to the rear wire placement plate 600 and the cantilever base 500 to form a triangle fixing, so that the structures of the rear wire placement plate 600 and the nut connecting plate 900 are both more stable. The nut connecting plate 900, the rear wire placement plate 600 and the cantilever base 500 may be integrally formed.

In another aspect, as shown in FIGS. 7-9, the present invention further provides a rapid prototyping device, including the cantilever assembly as described above. The advantages of the cantilever assembly as described above are included, and details will not be repeated here. Further, the rapid prototyping device also includes the movement assembly 800, the prototyping platform 100 and a base 10. The movement assembly 800 includes a lead screw nut 820, a guide plate 830, a lead screw 840, a slider 850 and an electric motor. The guide plate 830 is connected to the base 10, and two ends of the cantilever body 200 are respectively connected to the prototyping platform 100 and the cantilever base 500. The cantilever base 500 further includes a connecting plate connected to the slider 850 via a bolt, and the slider 850 is slidably connected to a sliding bar of the guide plate 830. The lead screw nut 820 is fixed on the nut connecting plate 900, and the lead screw 840 is connected to the electric motor and screwed to the lead screw nut 820. The electric motor is configured to drive the lead screw 840 to rotate. Through the interaction between the lead screw 840 and the lead screw nut 820, the cantilever base 500 and the cantilever body 200 are moved, in turn driving the prototyping platform 100 to move up and down.

The rear wire placement plate 600 extends into the recess of the movement assembly 800 facing away from the cantilever base 500. The specific way of extending may be as shown in FIG. 7. The guide plate 830 is bypassed from the side of the guide plate 830, to realize extending into the recess of the guide plate 830. It is also possible that, as shown in FIGS. 8-9, the guide plate 830 includes a moving opening 810 extending in the moving direction of the cantilever body 200, the moving opening 810 is an opening of the recess, and the rear wire placement plate 600 of the cantilever body 200 is configured to pass through the moving opening 810 and can move along the moving opening 810. The rear wire placement plate 600 extends into the recess of the guide plate 830 through the moving opening 810. The guide plate 830 may further include two guide sub-plates fixed to the base 10 side by side at intervals to form the moving opening 810 described above.

The above descriptions are merely particular embodiments of the present invention, but the scope of protection of the present invention is not limited thereto. Any changes or substitutions that may be readily conceived by those skilled in the art within the technical scope disclosed by the present invention shall fall within the scope of protection of the present invention. Therefore, the scope of protection of the present invention should be determined by the scope of protection of the claims.

## Claims

**1.** A cantilever assembly, configured to be connected to a movement assembly (800) and a prototyping platform (100) of a rapid prototyping device to drive the prototyping platform (100) to move under an action of the movement assembly (800), wherein the cantilever assembly comprises:
a cantilever body (200), wherein a first end of the cantilever body (200)is configured to be connected to the prototyping platform (100), and a second end of the cantilever body (200) is configured to be connected to the movement assembly (800); and
a force sensor (300), wherein the force sensor (300) is arranged on the cantilever body (200) and configured to detect a deformation of the cantilever body (200) and generate a detection signal.

**2.** The cantilever assembly according to claim 1, further comprising a conversion circuit (400), wherein the conversion circuit (400) is electrically connected to the force sensor (300), the conversion circuit (400) is further electrically connected to a main controller of the rapid prototyping device, the conversion circuit (400) is configured to amplify the detection signal, and a wire between the conversion circuit (400) and the main controller has a length at least three times a length of a wire between the conversion circuit (400) and the force sensor (300).

**3.** The cantilever assembly according to claim 1, wherein
the force sensor (300) is a strain gage, the cantilever body (200) is provided with a deformation hole (210), and the strain gage is arranged at an outer surface of the cantilever body (200) corresponding to the deformation hole (210) runs through two sides of the cantilever body (200), and an extending direction of the deformation hole (210) is perpendicular to a moving direction of the cantilever body (200), and is perpendicular to a direction from the first end to the second end of the cantilever body (200); and
the strain gage is arranged on at least one side of the cantilever body (200) in the moving direction.

**4.** The cantilever assembly according to claim 3, wherein
the deformation hole (210) comprises a first sub-hole area (212), a communication area (211) and a second sub-hole area (213) arranged side by side in sequence in the direction from the first end to the second end of the cantilever body (200), and the first sub-hole area (212) is in communication with the second sub-hole area (213) through the communication area (211);
a minimum distance between hole walls of the first sub-hole area (212) and the second sub-hole area (213) and the outer surface of the cantilever body (200) in the moving direction of the cantilever body (200) is less than a minimum distance between a hole wall of the communication area (211) and the outer surface of the cantilever body (200) in the moving direction of the cantilever body (200);
outer surfaces of the cantilever body (200) corresponding to the first sub-hole area (212) and the second sub-hole area (213) are both provided with the strain gage; and
the strain gage corresponds to the minimum distance between at least one of the first sub-hole area (212) and the second sub-hole area (213) and the outer surface of the cantilever body (200) in the moving direction of the cantilever body (200).

**5.** The cantilever assembly according to claim 4, wherein
an inner wall of the first sub-hole area (212) and an inner wall of the second sub-hole area (213) are both arc-shaped inner walls.

**6.** The cantilever assembly according to claim 4, wherein an inner wall of the communication area (211) is an arc-shaped inner wall.

**7.** The cantilever assembly according to claim 3, wherein
the deformation hole (210) is provided with a first protrusion (214) and a second protrusion (215) respectively on inner walls opposite to the first end and the second end of the cantilever body (200), the first protrusion (214) and the second protrusion (215) being located in the middle of the deformation hole (210) in the moving direction of the cantilever body (200).

**8.** The cantilever assembly according to claim 2, further comprising a cantilever base (500), wherein the cantilever base (500) is configured to be connected to the movement assembly (800), the cantilever body (200) is connected to the cantilever base (500), the cantilever base (500) comprises a receiving cavity (510), the conversion circuit (400) is located in the receiving cavity, the cantilever body (200) is provided with a wire entry hole (220), the wire entry hole (220) is in connection with the receiving cavity, and the conversion circuit (400) is electrically connected to the force sensor (300) by means of the wire entry hole (220).

**8.** The cantilever assembly according to claim 7, further comprising:
a rear wire placement plate (600), wherein the rear wire placement plate (600) is connected to the cantilever base (500), and an end of the rear wire placement plate (600) extends in a direction away from the cantilever base (500), wherein when the cantilever assembly is connected to the movement assembly (800), the end of the rear wire placement plate (600) is located in a recess of the movement assembly (800);
the rear wire placement plate (600) is provided with a wiring groove (610), the cantilever base (500) is provided with a wire exit hole (520), a first end of the wiring groove (610) is connected to the receiving cavity (510) through the wire exit hole (520), and a second end of the wiring groove (610) extends to the end of the rear wire placement plate (600);
the wire (700) between the conversion circuit (400) and the main controller of the rapid prototyping device is routed through the wiring groove (610);
the wire (700) between the conversion circuit (400) and the main controller comprises a spring cable, a part of the spring cable is fixedly connected to the rear wire placement plate (600), and the other part of the spring cable is fixedly connected to the base (500).

**9.** The cantilever assembly according to claim 8, the cantilever assembly further comprises a nut connecting plate (900), the nut connecting plate (900) being connected to at least one of the rear wire placement plate (600) and the cantilever base (500) and configured to be threadedly connected to a lead screw nut (820) of the movement assembly (800); and
the conversion circuit (400) being integrated on a circuit board, the circuit board being electrically connected to the main controller via a first terminal, and/or the circuit board being electrically connected to the force sensor (300) via a second terminal.

**10.** A rapid prototyping device, comprising the cantilever assembly of any one of claims 1-9.

**11.** The rapid prototyping device according to claim 10, further comprising:
the movement assembly (800), the prototyping platform (100) and a base (10), wherein
the movement assembly (800) is connected to the base (10), the cantilever body (200) is connected to the prototyping platform (100) and the movement assembly (800) respectively, and the movement assembly (800) is configured to drive the cantilever body (200) to move the prototyping platform (100); and
the movement assembly (800) comprises a moving opening (810) extending in the moving direction of the cantilever body (200) and comprises a recess in communication with the moving opening (810), the rear wire placement plate (600) of the cantilever body (200) passes through the moving opening (810), and the end of the cantilever body (200) is placed in the recess and is movable along the moving opening (810).
